# EUROPÄISCHE PATENTANMELDUNG

(11) **EP 2 402 690 A2**
(43) Veröffentlichungstag der Anmeldung: **04.01.2012**
(21) Anmeldenummer: 11004947.5
(22) Anmeldetag: 16.06.2011
(51) Int. Cl.: F25D 23/12

(54) **Kühl- und/oder Gefriergerät**

(30) Priorität: 30.06.2010 DE 102010025597; 03.08.2010 DE 102010033242
(71) Anmelder: Liebherr-Hausgeräte Ochsenhausen GmbH, 88416 Ochsenhausen (DE)
(72) Erfinder: Ertel, Thomas, Dipl-Ing., 88299 Leutkirch (DE); Schick, Michael, Dipl.-Phys. oec., 88480 Stetten (DE)
(74) Vertreter: Herrmann, Uwe

(57) **Zusammenfassung**

Die vorliegende Erfindung betrifft ein Kühl- und/oder Gefriergerät mit wenigstens einem Gefrierteil, wobei im Gefrierteil wenigstens ein modular aufgebauter Speiseeisbereiter vorgesehen ist, wobei der Speiseeisbereiter als modulare, voneinander trennbare Komponenten wenigstens ein Rührmittel und wenigstens einen austauschbaren Behälter zur Aufnahme von Speiseeis aufweist und wobei weiter ein Antriebsmittel vorgesehen ist, mittels dessen das Rührmittel und/oder der Behälter antreibbar ist. Des Weiteren betrifft die vorliegende Erfindung ein Verfahren zum Betrieb eines Speiseeisbereiters in einem Kühl- und/oder Gefriergerät.

## Beschreibung

Die vorliegende Erfindung betrifft ein Kühl- und/oder Gefriergerät sowie ein Verfahren zum Betrieb eines Speiseeisbereiters.

Bisher sind im Wesentlichen zwei Arten von Eismaschinen zur Zubereitung von Speiseeis bekannt:
Zum Einen können Speiseeismaschinen passiv gekühlt ausgeführt sein, wobei ein großer Kühlakku, der zumeist als Eisbehälter ausgeführt ist, verwendet wird. In diesem Zusammenhang ist der als Kältespeicher dienende Kühlakku mit einem Latentwärmespeicher versehen.
Zum Anderen können Speiseeismaschinen aktiv gekühlt ausgeführt sein, wobei diese Maschinen ein Kälteaggregat aufweisen.

Bei passiv gekühlten Geräten ist die Eisbereitung aufwendig, da das Gerät selbst für eine längere Zeit im Gefrierfach tiefgekühlt werden muss, um zur Zubereitung von Speiseeis verwendet werden zu können. Die Grundmasse für das Speiseeis muss nach der Herstellung, die ja bei Raumtemperatur erfolgt, im Kühlschrank vorgekühlt und anschließend in die Speiseeismaschine umgefüllt werden. Das Ergebnis ist durch begrenzten Kältevorrat oft nicht zufriedenstellend, da viele undefinierte Faktoren einwirken. Das hergestellte Eis ist vorzugsweise sofort zu verzehren oder aber zur Lagerung erneut umzufüllen. Durch das Umfüllen leidet jedoch die Qualität. Die Behälter, in die das Eis zum Verzehr eingefüllt wird, sollten idealerweise ebenfalls gekühlt werden, da das Eis andernfalls schnell zum Schmelzen neigt. Derartige gekühlte Behälter werden aber üblicherweise kaum eingesetzt.

Für eine erneute Herstellung von Eis ist ein weiterer Behälter notwendig, oder es kann erst nach vollständiger Leerung und Reinigung des Behälters erneut Eis zubereitet werden. Da die Behälter aufgrund der erforderlichen Wärmekapazität gewisse Mindestabmessungen aufweisen müssen, ist es bislang nicht möglich oder üblich gewesen, mehrere Behälter in einem Gefriergerät vorzuhalten. Insgesamt ist die Herstellung von Speiseeis mittels einer passiv gekühlten Speiseeismaschine aufwendig und nicht unproblematisch.

Aktiv kühlende Maschinen erreichen in der Regel ein sehr gutes Ergebnis, sind aber in der Anschaffung bedingt durch die aufwendigere Technik und eine zumeist hochwertige Ausführung deutlich teurer. Das Eis kann problemlos sofort verzehrt oder zur Lagerung im Gefriergerät in einen Behälter umgefüllt werden. Auch hier ist ein geringer Qualitätsverlust unvermeidlich.

Aus der WO 02/33333 A1 ist bereits ein an der Tür des Gefrierfaches eines kombinierten Kühl- und Gefriergerätes angeordneter Speiseeisbereiter bekannt. Bei diesem Speiseeisbereiter ist unter Anderem vorgesehen, mittels eines Drehmomentsensors auf die Konsistenz des Speiseeises zu schließen und den Zubereitungsvorgang entsprechend zu beenden.

Aus der US 6,082,130 ist ein an der Tür des Gefrierfaches eines kombinierten Kühl- und Gefriergerätes angeordneter Eisbereiter bekannt, der zur Zubereitung von Crushed-Eis geeignet ist.

Die US 4,942,979 betrifft einen Eiswürfelbereiter, der im Gefrierteil eines kombinierten Kühl- und Gefriergerätes angeordnet ist. Der Eiswürfelbereiter weist dabei eine schubladenartig ausgebildete und in den Gefrierteil eingeschobene Eiswürfelspendervorrichtung auf, mittels derer länglich ausgebildete Eiswürfelstücke zur Eiswürfelausgabevorrichtung in der Tür des Gefrierteils des Kühl- und Gefriergerätes in einer definierten Anzahl gefördert werden können.

Die AT 310 786 B betrifft eine Speiseeismaschine mit einem feststehenden Gefrierkesselmantel und einem davon getrennten, axial verschiebbarem Gefrierkesselboden sowie einem im Gefrierkessel umlaufenden, nach oben zusammen mit dem Gefrierkesselboden und der Speiseeismasse ausziehbarem Rühr- und Spateleinsatz.

Die DE 36 31 601 A1 betrifft einen Kältespeicher für die Speiseeisherstellung, wobei als Kältespeicher ein Latentwärmespeichermaterial eingesetzt wird und dieses Latentwärmespeichermaterial 2-5 Vol.% Äthylalkohol enthält.

Aus der US 4,450,692 ist weiter ein Kühlschrank mit Gefrierfach bekannt, bei dem der bestehende Eiswürfelbereiter gegen einen Speiseeisbereiter ausgetauscht werden kann.

Die GB 656 953 offenbart ebenfalls ein Kühlgerät mit Gefrierfach, in dem ein Speiseeisbereiter angeordnet ist.

Es ist daher die Aufgabe der vorliegenden Erfindung, ein Kühl- und/oder Gefriergerät der eingangs genannten Art in vorteilhafter Weise weiterzubilden, insbesondere dahingehend, dass es dem Nutzer eines Kühl- und/oder Gefriergerätes einfach möglich ist, bedarfsgerecht selbst Speiseeis und dies vorzugsweise in mehreren Sorten herstellen zu können.

Diese Aufgabe wird erfindungsgemäß gelöst durch ein Kühl- und/oder Gefriergerät mit den Merkmalen des Anspruchs 1. Danach ist vorgesehen, dass ein Kühl- und/oder Gefriergerät mit wenigstens einem Gefrierteil versehen ist, wobei im Gefrierteil wenigstens ein modular aufgebauter Speiseeisbereiter vorgesehen ist, wobei der Speiseeisbereiter als modulare, voneinander trennbare Komponenten wenigstens ein Rührmittel und wenigstens einen austauschbaren Behälter zur Aufnahme von Speiseeis aufweist und wobei weiter ein Antriebsmittel vorgesehen ist, mittels dessen das Rührmittel antreibbar ist.

Der Speiseeisbereiter weist vorzugsweise die voneinander trennbaren Komponenten Antriebsmittel, Rührmittel und einen austauschbaren Behälter auf. Der Behälter ist beispielsweise auch die Komponente, in dem die Grundmasse, also die Zutaten für die Speiseeiszubereitung durch das Rührmittel wie etwa ein Rührwerk verarbeitet wird. Das Rührmittel kann ein Knetwerkzeug und/oder ein Rührwerkzeug aufweisen. Als Antriebsmittel kann ein Elektromotor oder ein sonstiger Antrieb eingesetzt werden, der ein ausreichendes Drehmoment zum Antrieb des Rührmittels bereitstellen kann.

Die Trennbarkeit und der modulare Aufbau der Komponenten des Speiseeisbereiters erlaubt es insbesondere, Speiseeis zuzubereiten und ein Umfüllen, das wie eingangs dargestellt mit einem zumindest leichten Qualitätsverlust einhergeht, zu vermeiden. Denn der Behälter mit dem fertig zubereiteten Speiseeis kann nach dem Trennen vom Rührmittel und Antrieb entnommen werden und durch einen anderen, vorzugsweise baugleichen Behälter ohne weiteres ersetzt werden. Der Behälter weist vorzugsweise einen runden Querschnitt und eine im Wesentlichen zylindrische Grundform auf.

Das im Behälter befindliche Speiseeis ist direkt nach Beendigung der Speiseeiszubereitung bereit für den sofortigen Verzehr, kann jedoch auch ohne weiteres im Gefrierfach eingelagert werden. Gleichzeitig kann aber mit dem Austauschbehälter z. B. eine weitere, neue Speiseeissorte oder bei größerem Bedarf die gleiche Sorte zusätzlich zubereitet werden. Nach der Zubereitung wird das hergestellte Speiseeis auf eine vorteilhafte Lagertemperatur von ca. -18°C gekühlt.

Durch die erfindungsgemäße Ausgestaltung ergibt sich der Vorteil, dass es dem Nutzer des Kühl- und/oder Gefriergerätes problemlos ermöglicht wird, selbst Eiskreme bzw. Speiseeis herzustellen. Eine hervorragende Qualität kann erzielt werden und der Einsatz eines zusätzlichen Gerätes mit hoher Stromaufnahme wegen des Kühlbedarfs für einen externen Speiseeisbereiter ist nicht mehr erforderlich.

Ein weiterer Vorteil besteht darin, dass Speiseeis mit eigenen Rezepten und mit selbst ausgewählten Zutaten hergestellt werden kann. Durch gezielte Auswahl von Zutaten kann das hergestellte Speiseeis besonders vitamin- und nährstoffreich zusammengestellt werden. Es ist nicht erforderlich, die in der Industrie verwendeten Zusatzstoffe beizugeben, was von vielen Nutzern gewünscht wird. Auch Personen mit Lebensmittelallergien oder anderen Lebensmittelunverträglichkeiten, die dazu führen, industriell hergestelltes Speiseeis nicht essen zu können, können so Zugang zu einer großen Auswahl an Speiseeis-Sorten erhalten.

Eine kostengünstige Ausführung zur Eisherstellung mit unkomplizierter Anwendung in wenigen Arbeitsschritten für den Nutzer wird ermöglicht und ein gleichbleibendes Ergebnis bei der Speiseeisherstellung kann ebenfalls sichergestellt werden.

Die Zubereitung des Speiseeises erfolgt im Gefrierteil, so dass die dort ohnehin vorhandene Kälteleistung vorteilhaft zur Speiseeisherstellung und zur Kühlung des Speiseeisbereiters genutzt wird. Eine Vorkühlung der Grundmasse zur Speiseeisherstellung oder des Speiseeisbereiters ist somit nicht erforderlich.

Der Betrieb des Rührmittels kann zeit- und/oder temperaturgesteuert erfolgen. Hierdurch kann eine optimale Qualität des Speiseeises erreicht werden. Beispielsweise kann vorgesehen sein, dass bei der wichtigen Kühlphase von 0°C bis -8°C die Kühlung durch die umgebende Luft im Gefrierteil sanft und gleichmäßig unter ständigem Rühren erfolgt.

Mit Funktionen wie einer sogenannte DuraFreeze-Funktion oder einer SuperFrost-Funktion, die das Absenken der Temperatur auf ca. -28°C für die Langzeitlagerung von Gefriergut bzw. das Absenken der Temperatur auf -32°C für das vitaminschonende Einfrieren betreffen, kann der Wärmeentzug aus der Grundmasse bzw. Eismasse beschleunigt werden.

Darüber hinaus ist möglich, dass der Behälter gemeinsam mit dem Rührmittel einsetzbar und/oder ausziehbar ist und dass wenigstens eine Kopplung vorgesehen ist, mittels derer Rührmittel und Antriebsmittel mittelbar und/oder unmittelbar verbindbar sind, wobei die Kopplung vorzugsweise formschlüssig und/oder kraftschlüssig ausgebildet ist und/oder ein Zahnradgetriebe und/oder ein Kegelradgetriebe aufweist, und wobei weiter vorzugsweise eine Kopplung durch eine Hubbewegung in Folge der Einschubbewegung herbeiführbar ist. Der Einsatz eines Kegelradgetriebes bzw. Winkelgetriebes erlaubt eine Ankopplung des Rührmittels an den Antrieb durch bloßes Einschieben. Eine Kopplung durch eine Hubbewegung kann dadurch erfolgen, dass das im Behälter befindliche Rührmittel gemeinsam mit dem Behälter durch Einfahren über eine schiefe Ebene oder Keilelemente, z. B. eine keilförmige Unterlage, angehoben und hierdurch an den Antrieb gekoppelt wird. Eine Kopplung, die gemeinsam mit der Einschubbewegung erfolgt, kann vorteilhafterweise auch durch den Einsatz von Zahnrädern erfolgen. Beim Einschieben des Behälters mit dem Rührmittel kann das Antriebszahnrad des Rührmittels zwischen zwei Zahnräder gleiten, die am Antriebsmittel montiert sind. Dabei dient eines zur Übertragung des Antriebsdrehmomentes und das andere als Fixierung in Querrichtung.

Denkbar ist weiter, dass die Kopplung einen Bajonettverschluss oder Steckverschluss oder einen sonstigen im Haushaltsbereich gängigen, wie z. B. bei einem Mixer oder Handrührgerät üblichen Kopplungsverschluss umfasst oder als ein solcher ausgeführt ist.

Ebenso ist denkbar, dass der Behälter im Behälterboden eine domartige, mittig angeordnete Ausformung aufweist, in dem die Antriebsachse bzw. Antriebswelle des Rührmittels verläuft. Das Antriebsmittel kann in dieser domartigen Ausformung integriert und/oder unterhalb des Behälters angeordnet sein.

Ferner ist möglich, dass wenigstens ein Steuerungs- und/oder Regelungsmittel vorgesehen ist, mittels dessen die Drehzahl des Rührmittels des Speiseeisbereiters durch Messwerte umfassend die Stromaufnahme des Rührmittels bzw. des Antriebs des Speiseeisbereiters, die Temperatur der Eismasse und/oder die Lufttemperatur im Kühlraum, vorzugsweise durch eine kombinierte Aufnahme aller Daten oder durch vorgegebene Abläufe steuerbar und/oder regelbar ist.

Vorteilhaft ist denkbar, dass vorzugsweise die Überwachung anhand der Stromaufnahme des Rührmittels bzw. des Antriebs derart durchgeführt wird, dass anhand eines Anstiegs der Stromaufnahme über einen vorher festgelegten Grenzwert geräteseitig feststellbar ist, dass die Eismasse die gewünschte Zähigkeit und Konsistenz erreicht hat und damit fertig zubereitet ist, so dass infolgedessen das Rührmittel abgestellt wird. Durch diese Art der Überwachung anhand der Stromaufnahme kann gleichzeitig das Rührmittel vor Überlastung geschützt werden.

Weiter ist vorteilhaft denkbar, dass vorzugsweise das Rührmittel mit unterschiedlichen, insbesondere zu Beginn mit höheren Drehzahlen betrieben wird. Zu Beginn kann z. B. eine hohe Drehzahl verwendet werden, um die noch dünnflüssigen Zutaten zu vermischen. Mit der Zeit kühlen diese Zutaten ab und werden zähflüssig, so dass die Drehzahl verringert werden kann und das Speiseeis die gewünschte Konsistenz erhält.

Auch ist zusätzlich oder alternativ denkbar, dass vorzugsweise der Zustand der Eismasse durch eine Messung der Drehzahl des Rührmittels beobachtet wird, insbesondere durch ein Drehzahlerfassungsmittel bestehend aus wenigstens einem Magneten und wenigstens einem Reedschalter. Bei den auftretenden niedrigen Drehzahlen ist eine Überwachung mittels eines Magneten und eines Reedschalters vorteilhaft möglich.

Des Weiteren betrifft die vorliegende Erfindung ein Kühl- und/oder Gefriergerät mit den Merkmalen des Anspruchs 4. Danach ist vorgesehen, dass ein Kühl- und/oder Gefriergerät mit wenigstens einem Gefrierteil versehen ist, wobei im Gefrierteil wenigstens ein modular aufgebauter Speiseeisbereiter vorgesehen ist, wobei der Speiseeisbereiter als modulare, voneinander trennbare Komponenten wenigstens ein Rührmittel und wenigstens einen austauschbaren Behälter zur Aufnahme von Speiseeis aufweist und wobei weiter ein Antriebsmittel vorgesehen ist, mittels dessen der Behälter oder mittels dessen das Rührmittel und der Behälter antreibbar ist. Mit dem Kühl- und/oder Gefriergerät mit den Merkmalen des Anspruchs 4 lassen sich die vorstehend im Zusammenhang mit dem Kühl- und/oder Gefriergerät mit den Merkmalen des Anspruchs 1 beschriebenen Vorteile und Vorzüge entsprechend und genausogut verwirklichen.

Ferner ist möglich, dass wenigstens ein Steuerungs- und/oder Regelungsmittel vorgesehen ist, mittels dessen die Drehzahl des Behälters des Speiseeisbereiters durch Messwerte umfassend die Stromaufnahme des Antriebsmittels des Behälters bzw. des Antriebs des Speiseeisbereiters, die Temperatur der Eismasse und/oder die Lufttemperatur im Kühlraum, vorzugsweise durch eine kombinierte Aufnahme aller Daten oder durch vorgegebene Abläufe steuerbar und/oder regelbar ist.

Vorteilhaft ist denkbar, dass vorzugsweise die Überwachung anhand der Stromaufnahme des Antriebsmittels des Behälters derart durchgeführt wird, dass anhand eines Anstiegs der Stromaufnahme über einen vorher festgelegten Grenzwert geräteseitig feststellbar ist, dass die Eismasse die gewünschte Zähigkeit und Konsistenz erreicht hat und damit fertig zubereitet ist, so dass infolgedessen das Antriebsmittel abgestellt wird. Durch diese Art der Überwachung anhand der Stromaufnahme kann gleichzeitig das Antriebsmittel vor Überlastung, aber auch das fest installierte Rührmittel von mechanischer Überlastung geschützt werden.

Weiter ist vorteilhaft denkbar, dass vorzugsweise das Antriebsmittel zum Antrieb des Behälters mit unterschiedlichen, insbesondere zu Beginn mit höheren Drehzahlen betrieben wird. Zu Beginn kann z. B. eine hohe Drehzahl verwendet werden, um die noch dünnflüssigen Zutaten zu vermischen. Mit der Zeit kühlen diese Zutaten ab und werden zähflüssig, so dass die Drehzahl verringert werden kann und das Speiseeis die gewünschte Konsistenz erhält.

Auch ist zusätzlich oder alternativ denkbar, dass vorzugsweise der Zustand der Eismasse durch eine Messung der Drehzahl des Behälters beobachtet wird, insbesondere durch ein Drehzahlerfassungsmittel bestehend aus wenigstens einem Magneten und wenigstens einem Reedschalter. Bei den auftretenden niedrigen Drehzahlen ist eine Überwachung mittels eines Magneten und eines Reedschalters vorteilhaft möglich.

Weiter kann vorgesehen sein, dass das Rührmittel feststehend im Gefrierteil angeordnet ist und/oder werden kann und/oder dass wenigstens eine Kopplung vorgesehen ist, mittels derer Behälter und Antriebsmittel mittelbar und/oder unmittelbar verbindbar sind, wobei die Kopplung vorzugsweise formschlüssig und/oder kraftschlüssig ausgebildet ist und/oder ein Zahnradgetriebe und/oder ein Kegelradgetriebe aufweist und/oder wobei die Kopplung vorzugsweise zumindest teilweise verdeckt ausgebildet ist, und/oder dass der Behälter gemeinsam mit dem Rührmittel einsetzbar und/oder ausziehbar ist.

Beispielsweise kann die Ankopplung des Antriebsmittels mit dem Behälter, der schüsselförmig ausgeführt sein kann, einen Zahnkranz umfassen, der am oberen oder unteren Rand des Behälters angeordnet ist. Vorzugsweise ist diese Art der Ankopplung zumindest teilweise verdeckt, insbesondere nahezu vollständig verdeckt ausgeführt.

Auch ist es möglich, dass die Ankopplung des Behälters mit dem Antriebsmittel im Behälterboden erfolgt, insbesondere verdeckt erfolgt. Hierzu können entsprechende Blenden und/oder Ausnehmungen bzw. Ausformungen im Behälter vorgesehen sein.

Des Weiteren kann vorgesehen sein, dass der Behälter zumindest aus einem Material besteht, das eine gute Wärmeleitung und/oder eine leicht zu reinigende hygienische Oberfläche aufweist, wobei vorzugsweise Verbundmaterialien eingesetzt werden, die beispielsweise Edelstahl und/oder Aluminium umfassen können, und/oder dass der Behälter doppelwandig ausgeführt ist und mit einer Sole oder einem Latentwärmespeicher mit einem Gefrierpunkt von ca. -20°C bis -5°C gefüllt ist und/oder dass der Behälter zumindest teilweise konisch ausgebildet ist. Der Behälter kann vorteilhafterweise über einen Kältespeicher in Form eines Latentwärmespeichers verfügen, wodurch die anfängliche Kühlung der eingefüllten Grundmasse beschleunigt werden kann. Diese Kühlung kann durch Zugabe von einigen Eiswürfeln unterstützt werden, bzw. kann bei einer Ausführung ohne Latentwärmespeicher nur durch die Eiswürfelzugabe dieser Vorgang beschleunigt werden. Um die Ableitung der Wärme an die Luft zu verbessern, kann der Behälter nach außen mit Einrichtungen zur Vergrößerung der Oberfläche wie Rippen oder Blechen usw. ausgestattet sein. Vorteilhafterweise wird der Behälter platzsparend ausgeführt, um die Lagerung mehrerer Behälter im Gefrierteil zu ermöglichen. Hierzu bietet es sich an, die Behälter konisch auszubilden, so dass die Behälter bei Nichtgebrauch ineinander gestapelt werden und z. B. im Gefrierteil platzsparend gelagert werden können.

Vorteilhaft ist ferner möglich, dass der Behälter in Form einer Schublade für das Gefrierteil des Kühl- und/oder Gefriergerätes ausgebildet ist und/oder in einer Schublade des Gefrierteils des Kühl- und/oder Gefriergerätes aufnehmbar und/oder aufgenommen ist und/oder dass das Antriebsmittel in der Decke, Seitenwand und/oder Rückwand des Kühl- und/oder Gefriergerätes angeordnet ist. Dadurch ergibt sich beispielsweise der Vorteil, dass das Fach, in dem der Speiseeisbereiter angeordnet ist, alternativ als vollwertiges Gefrierfach verwendet werden kann. Auch ist denkbar, dass die Schublade bzw. das Schubfach, in der der Speiseeisbereiter angeordnet ist, als Gefrierschublade verwendet werden kann. Der Behälter kann das halbe oder das ganze Volumen der Schublade einnehmen. Bei einer Ausführung mit einem Winkelgetriebe können zwei Behälter in einer Schublade angeordnet werden, die dann jeweils die Hälfte des Volumens der Schublade beanspruchen.

Außerdem ist denkbar, dass wenigstens ein Luftumwälzmittel, insbesondere wenigstens ein Ventilator vorgesehen ist, mittels dessen die Luftströmung in und/oder um den Behälter erhöhbar und/oder die Abkühlung des Behälters und seines Inhalts beschleunigbar ist und/oder dass ein Eiswürfelzugabemittel vorgesehen ist, mittels dessen Eiswürfel und/oder Eisstückchen dem Behälter zuführbar sind. Zur Erhöhung des Kälteeintrags in den Behälter kann auch vorgesehen sein, dass der Speiseeisbereiter mittelbar und/oder unmittelbar an den Verdampfer des Kühl- und/oder Gefriergerätes und/oder einen Teil des Innenbehälters des Kühl- und/oder Gefriergerätes, der mit dem Verdampfer in Kontakt steht, angekoppelt ist. Durch die Zugabe von Eisstückchen, die vorzugsweise bei Bedarf zu Beginn der Speiseeiszubereitung dem Behälter z. B. über eine Zugaberinne und/oder -öffnung zugegeben werden können und beispielsweise in einem Vorratsbehälter z. B. des Eiswürfelbereiters vorgehalten werden, kann eine noch schnellere Abkühlung der Grundmasse erreicht werden. Denkbar ist, dass dieser Vorgang anhand der Temperatur der Grundmasse automatisch oder halbautomatisch zuschaltbar ist.

Des Weiteren kann vorgesehen sein, dass wenigstens ein Kältespeichermittel vorgesehen ist, das mit dem Behälter koppelbar ist, wobei das Kältespeichermittel vorzugsweise ein Kälteakku ist. Die Kälteakkus können beispielsweise in einer runden Form ausgeführt sein, so dass diese vorteilhaft an den Boden eines rund ausgeführten Behälters angekoppelt werden können und hierdurch eine schnellere Abkühlung der Grundmasse herbeiführbar ist. Bereits vorhandene Kälteakkus im Gefrierteil können über eine wärmeleitende Verbindung in den Behälter zur Speiseeisbereitung integriert werden. Denkbar ist auch, dass der Kälteakku in Form einer runden Schüssel ausgeführt ist. Bei einer derartigen Ausführung in Form einer runden Schüssel kann diese auch als Kühlbehälter für Getränkeflaschen verwendet werden. Bei dieser Verwendung kann die Schüssel auch im Kaltlagerfach vorgekühlt werden, um keine zu starke Kühlwirkung auf das Getränk herbeizuführen.

Es kann vorgesehen sein, dass das Kühl- und/oder Gefriergerät in einem gesonderten Kühlmodus zur Speiseeisherstellung mittels des Speiseeisbereiters betreibbar ist.

Des Weiteren ist möglich, dass wenigstens ein Ausgabemittel und/oder wenigstens ein Eingabemittel vorgesehen ist, wobei mittels des Ausgabemittels der Fortschritt der Speiseeiszubereitung anzeigbar ist und/oder wobei mittels des Eingabemittels die Speiseeiszubereitung steuerbar ist. Beispielsweise können die aktuellen Betriebsdaten des Speiseeisbereiters und/oder der Fortschritt der Eiszubereitung auf dem Display des Kühl- und/oder Gefriergerätes angezeigt werden. Das Display kann vorzugsweise ein Touchscreen sein. Alternativ oder zusätzlich ist denkbar, dass ein Tastenfeld als Eingabemittel vorgesehen ist.

Denkbar ist ferner, dass der Behälter als verschließbarer zylindrischer Behälter ausgebildet ist, wobei der Behälter vorzugsweise waagrecht im Gefrierteil liegend im eingesetzten Zustand angeordnet ist und wobei weiter vorzugsweise der Behälter und/oder die Antriebswelle des Rührmittels waagrecht in eine Halterung und eine Aufnahme des Antriebsmittels einschiebbar ist.

Darüber hinaus betrifft die vorliegende Erfindung ein Verfahren zum Betrieb eines Speiseeisbereiters in einem Kühl- und/oder Gefriergerät mit den Merkmalen des Anspruchs 14. Danach ist vorgesehen, dass bei einem Verfahren zum Betrieb eines Speiseeisbereiters in einem Kühl- und/oder Gefriergerät die Drehzahl des Rührmittels des Speiseeisbereiters durch Messwerte umfassend die Stromaufnahme des Rührmittels bzw. des Antriebs des Speiseeisbereiters, die Temperatur der Eismasse und/oder die Lufttemperatur im Kühlraum, vorzugsweise durch eine kombinierte Aufnahme aller Daten oder durch vorgegebene Abläufe, gesteuert wird.

Insbesondere kann das Verfahren mit einem Kühl- und/oder Gefriergerät nach einem der Ansprüche 1 bis 13 durchgeführt werden.

Denkbar ist weiter, dass vorzugsweise die Überwachung anhand der Stromaufnahme des Rührmittels bzw. des Antriebs derart durchgeführt wird, dass anhand eines Anstiegs der Stromaufnahme über einen vorher festgelegten Grenzwert geräteseitig feststellbar ist, dass die Eismasse die gewünschte Zähigkeit und Konsistenz erreicht hat und damit fertig zubereitet ist, so dass infolgedessen das Rührmittel abgestellt wird.

Auch ist möglich, dass das Rührmittel mit unterschiedlichen, insbesondere zu Beginn mit höheren Drehzahlen betrieben wird.

Weiter kann vorgesehen sein, dass der Zustand der Eismasse durch eine Messung der Drehzahl des Rührmittels beobachtet wird, insbesondere durch ein Drehzahlerfassungsmittel bestehend aus wenigstens einem Magneten und wenigstens einem Reedschalter.

Ferner betrifft die vorliegende Erfindung ein Verfahren zum Betrieb eines Speiseeisbereiters in einem Kühl- und/oder Gefriergerät mit den Merkmalen des Anspruchs 15. Danach ist vorgesehen, dass bei einem Verfahren zum Betrieb eines Speiseeisbereiters in einem Kühl- und/oder Gefriergerät die Drehzahl des Behälters des Speiseeisbereiters durch Messwerte umfassend die Stromaufnahme des Antriebsmittels des Behälters bzw. des Antriebs des Speiseeisbereiters, die Temperatur der Eismasse und/oder die Lufttemperatur im Kühlraum, vorzugsweise durch eine kombinierte Aufnahme aller Daten oder durch vorgegebene Abläufe, gesteuert wird.

Insbesondere kann das Verfahren mit einem Kühl- und/oder Gefriergerät nach einem der Ansprüche 1 bis 13 durchgeführt werden.

Denkbar ist weiter, dass vorzugsweise die Überwachung anhand der Stromaufnahme des Antriebsmittels des Behälters derart durchgeführt wird, dass anhand eines Anstiegs der Stromaufnahme über einen vorher festgelegten Grenzwert geräteseitig feststellbar ist, dass die Eismasse die gewünschte Zähigkeit und Konsistenz erreicht hat und damit fertig zubereitet ist, so dass infolgedessen das Antriebsmittel des Behälters abgestellt wird.

Auch ist möglich, dass das Antriebsmittel des Behälters und damit der Behälter mit unterschiedlichen, insbesondere zu Beginn mit höheren Drehzahlen betrieben wird.

Weiter kann vorgesehen sein, dass der Zustand der Eismasse durch eine Messung der Drehzahl des Behälters beobachtet wird, insbesondere durch ein Drehzahlerfassungsmittel bestehend aus wenigstens einem Magneten und wenigstens einem Reedschalter.

Weitere Einzelheiten und Vorteile der Erfindung sollen nachstehend anhand eines in der Zeichnung dargestellten Ausführungsbeispiels näher erläutert werden.

Es zeigen:
- Figur 1:: eine schematische Darstellung einer ersten Ausführungsform eines Speiseeisbereiters in einem Gefrierteil eines Kühl- und/oder Gefriergerätes;
- Figur 2:: eine weitere schematische Darstellung einer ersten Ausführungsform eines Speiseeisbereiters in einem Gefrierteil eines Kühl- und/oder Gefriergerätes;
- Figur 3:: eine schematische Darstellung einer zweiten Ausführungsform eines Speiseeisbereiters in einem Gefrierteil eines Kühl- und/oder Gefriergerätes;
- Figur 4:: eine schematische Darstellung einer dritten Ausführungsform eines Speiseeisbereiters in einem Gefrierteil eines Kühl- und/oder Gefriergerätes;
- Figur 5:: eine weitere schematische Darstellung einer dritten Ausführungsform eines Speiseeisbereiters in einem Gefrierteil eines Kühl- und/oder Gefriergerätes;
- Figur 6:: eine schematische Darstellung einer vierten Ausführungsform eines Speiseeisbereiters in einem Gefrierteil eines Kühl- und/oder Gefriergerätes;
- Figur 7:: eine schematische Darstellung einer fünften Ausführungsform eines Speiseeisbereiters in einem Gefrierteil eines Kühl- und/oder Gefriergerätes;
- Figur 8:: eine schematische Darstellung einer sechsten Ausführungsform eines Speiseeisbereiters in einem Gefrierteil eines Kühl- und/oder Gefriergerätes;
- Figur 9:: eine schematische Darstellung einer siebten Ausführungsform eines Speiseeisbereiters in einem Gefrierteil eines Kühl- und/oder Gefriergerätes;
- Figur 10:: eine schematische Darstellung einer achten Ausführungsform eines Speiseeisbereiters in einem Gefrierteil eines Kühl- und/oder Gefriergerätes;
- Figur 11:: eine schematische Darstellung einer neunten Ausführungsform eines Speiseeisbereiters in einem Gefrierteil eines Kühl- und/oder Gefriergerätes; und

- Figur 12:: eine schematische Darstellung einer zehnten Ausführungsform eines Speiseeisbereiters in einem Gefrierteil eines Kühl- und/oder Gefriergerätes.

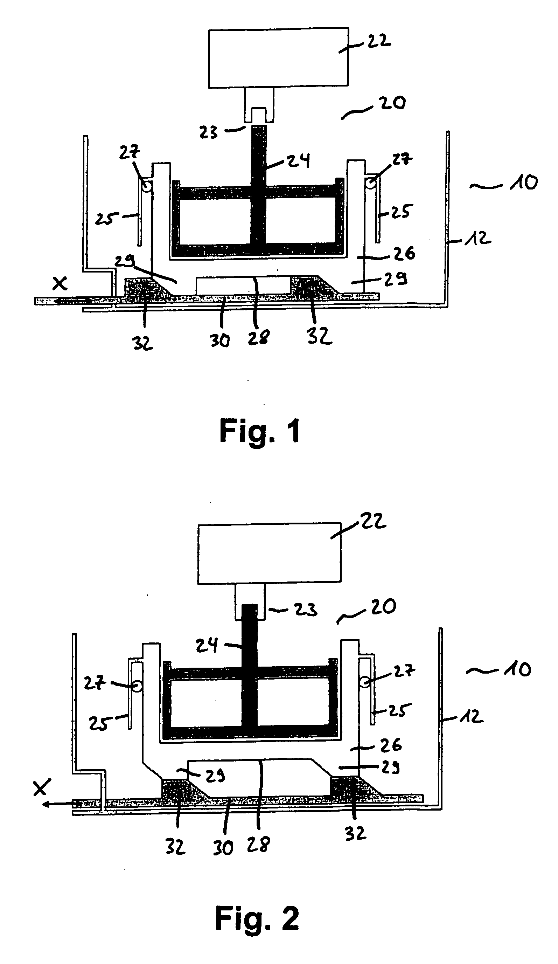

Figur 1 und 2 zeigen in schematischer Darstellung einen Ausschnitt des Gefrierteils 10 eines Kühl- und/oder Gefriergerätes, in dem der Speiseeisbereiter 20 in einer ersten Ausführungsform angeordnet ist.

Im oberen Bereich des Gefrierteils 10 ist der Antrieb 22 für das Rührmittel 24 angeordnet. Die Ankopplung des Antriebs 22 mit dem Rührmittel 24 über die Kupplung 23 erfolgt dadurch, dass der Behälter 26 zur Eisbereitung und -aufnahme des Speiseeisbereiters 20 auf die Führung 27 beim Einschieben in das Gefrierteil 10 aufgeschoben und hierdurch in der Querrichtung festgelegt wird. Die Führung 27 wird hier durch zwei henkelartige Arme 25 des Behälters 26, die auch als Tragehenkel 25 ausgestaltet sein können, umgriffen. Der Behälter 26 lässt sich hierdurch schubladenartig einschieben.

Der Behälter 26 weist ein Material auf, das zugleich eine gute Wärmeleitung und eine leicht zu reinigende hygienische Oberfläche bietet. Besonders vorteilhaft einsetzbar sind Verbundmaterialien, die beispielsweise Edelstahl und/oder Aluminium umfassen können.

Der Behälter 26 wird vorzugsweise doppelwandig ausgeführt mit einer Sole oder einem Latentwärmespeicher mit einem Gefrierpunkt von ca. -20°C bis -5°C gefüllt, um zu Beginn eine schnelle Abkühlung der Eismasse bzw. Grundmasse zu erreichen.

Der für das Ankoppeln von Rührmittel 24 und Antrieb 22 notwendige Hub erfolgt dadurch, dass unterhalb des Behälterbodens 28 des Behälters 26 eine seitlich verschiebliche Unterlage 30 bzw. Ebene 30 angeordnet ist, die Keilelemente 32 aufweist. Die Keilelemente 32 greifen an entsprechenden Gegenkeilelementen 29 an, die am Behälterboden 28 des Behälters 26 angebracht sind. Durch eine seitliche Bewegung X der Unterlage 30 wird eine Hubbewegung des Behälters 26 und damit auch des Rührmittels 24 herbeigeführt, so dass das Rührmittel 24 und der Antrieb 22 mittels der Kupplung 23 formschlüssig kuppeln und das Rührmittel 24 zur Speiseeisbereitung angetrieben werden kann.

In der Ebene 30 und insbesondere in den Keilelementen 32 können Kälteakkus angeordnet sein, so dass hierdurch zusätzlich eine schnellere Abkühlung der Eismasse im Behälter 26 erreicht werden kann.

Es ist denkbar, dass der Behälter 26 sowie die Ebene 30 in einer Schublade 12 des Gefrierteils 10 angeordnet sind, wie dies in Figur 1 und 2 dargestellt ist. Das Fach 12 bzw. der gesamte Gefrierteil 10, in dem der Speiseeisbereiter 20 angeordnet ist, kann alternativ als vollwertiges Gefrierfach verwendet werden. Hierzu kann der modular aufgebaute Speiseeisbereiter 20 in Einzelteilen entnommen werden. Insbesondere können der Antrieb 22, das Rührmittel 24 und der Behälter 26 einzeln entnommen werden.

Während der Eiszubereitung wird das Gefrierfach 10 in einem für die Eiszubereitung insbesondere hinsichtlich der Temperatur vorteilhaften Modus betrieben. Dabei ist es möglich, über nicht näher dargestellte Anzeigemittel die aktuellen Betriebsdaten der Eismaschine bzw. den Status der Eiszubereitung auf dem Display des Kühl- und/oder Gefriergerätes anzuzeigen.

Möglich ist weiter, dass oberhalb des Behälters 26 im Gefrierteil 10 ein weiterer Behälter mit Eiswürfeln bzw. vorzugsweise mit Crushed-Eis vorhanden ist, der bei Bedarf der Grundmasse für die Eisherstellung im Behälter 26 zugegeben werden kann, um eine schnellere Abkühlung zu Beginn des Vorgangs zu erreichen.

Die Drehzahl des Rührmittels 24 kann durch Messwerte wie die Stromaufnahme des Rührmittels 24 bzw. des Antriebs 22, die Temperatur der Eismasse und/oder die Lufttemperatur im Kühlraum, vorzugsweise durch eine kombinierte Aufnahme aller Daten oder durch vorgegebene Abläufe gesteuert werden. Diese Aufgabe übernimmt vorteilhafterweise die Gerätesteuerung und -regelung des Kühl- und/oder Gefriergerätes.

Im Einzelnen erfolgt die Überwachung anhand der Stromaufnahme des Rührmittels 24 bzw. des Antriebs 22 derart, dass anhand eines Anstiegs der Stromaufnahme über einen vorher festgelegten Grenzwert geräteseitig feststellbar ist, dass die Eismasse die gewünschte Zähigkeit und Konsistenz erreicht hat und damit fertig zubereitet ist. Infolgedessen wird das Rührmittel 24 abgestellt. Durch diese Überwachung der Stromaufnahme wird zugleich das Rührmittel 24 vor einer Überlastung geschützt.

Im Betrieb bzw. bei der Speiseeiszubereitung kann vorgesehen sein, dass das Rührmittel 24 mit unterschiedlichen Drehzahlen betrieben wird. Zu Beginn kann eine hohe Drehzahl verwendet werden, um die noch dünnflüssigen Zutaten der Grundmasse zu vermischen. Mit der Zeit kühlen die Zutaten ab und werden zähflüssig. Die Drehzahl des Rührmittels 24 wird dann reduziert, damit das Eis die gewünschte Konsistenz erhält. Es ist möglich, dass der Zustand der Eismasse durch eine Messung der Drehzahl des Rührmittels 24 beobachtet werden kann. Bei den niedrigen auftretenden Drehzahlen ist eine einfache Überwachung z. B. mit einem Magneten und einem Reedschalter, der pro Umdrehung ein Signal sendet, möglich.

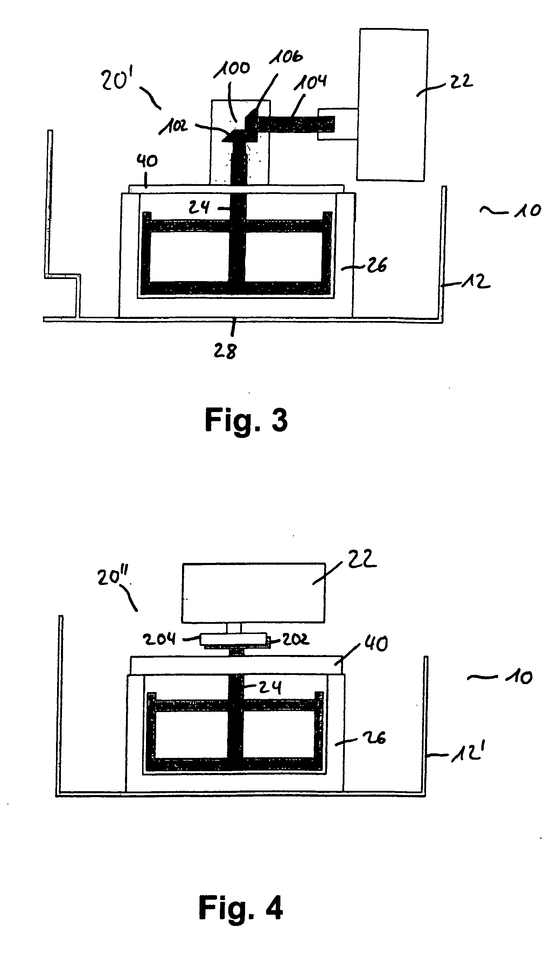

Figur 3 zeigt eine abgewandelte, zweite Ausführungsform des Speiseeisbereiters 20', die bis auf die nachstehend beschriebenen Unterschiede mit der in Figur 1 und 2 dargestellten Ausführungsform übereinstimmt. Dabei sind gleiche oder vergleichbare Merkmale mit den gleichen Bezugszeichen wie in den Figuren 1 und 2 versehen.

Bei dem in Figur 3 dargestellten Ausführungsbeispiels erfolgt die Anbindung des Rührmittels 24 über ein Winkelgetriebe 100, das ein endseitig des Rührmittels 24 angeordnetes Kegelrad 102 und ein endseitig der Antriebswelle 104 angeordnetes zweites Kegelrad 106 aufweist. Der Antrieb 22 ist hier seitlich versetzt angeordnet mit einer waagrechten Antriebswelle 104. Zur Abdeckung des Behälterinneren ist unterhalb des Winkelgetriebes 100 eine Abdeckung 40 vorgesehen, die beispielsweise ein Eintropfen von Schmiermittel in den Behälter 26 verhindert.

Die Fixierung in Querrichtung des Behälter 26 kann auch hier, obwohl nicht explizit gezeigt, durch die Henkel 25 und die Führung 27 erfolgen. Alternativ kann auch vorgesehen sein, dass der Boden 28 des Behälter 26 Führungsmittel wie Führungsschienen aufweist, mittels derer der Behälter 26 in das Fach 12 geführt einschiebbar ist oder dass der Behälter 26 einen Durchmesser aufweist, der an die Innenabmessungen des Fachs 12 derart angepasst ist, dass er durch die Seitenwände des Fachs 12 geführt wird.

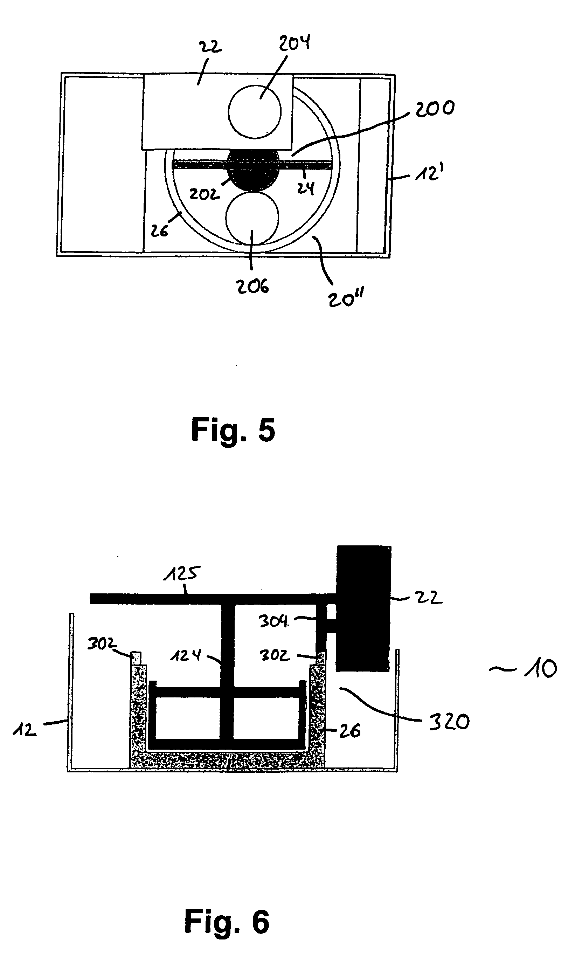

Figur 4 und Figur 5 zeigen eine abgewandelte, dritte Ausführungsform des Speiseeisbereiters 20", die bis auf die nachstehend beschriebenen Unterschiede mit der in Figur 1 und 2 dargestellten Ausführungsform übereinstimmt. Dabei sind gleiche oder vergleichbare Merkmale mit den gleichen Bezugszeichen wie in den Figuren 1 und 2 versehen.

Hierbei wird das Rührmittel 24 über ein Getriebe 200 angetrieben. Das Zahnrad 202, das endseitig des Rührmittels 24 angeordnet ist, kann dabei in das Getriebe umfassend die Zahnräder 204 und 206 eingeschoben werden, wobei das Zahnrad 204 zur Drehmomentübertragung des vom Antrieb 22 bereitgestellten Drehmoments dient. Das Zahnrad 206 dient zur Fixierung in Querrichtung. Beim Einschieben des Speiseeisbereiters 20", der hier fest in das Fach 12' integriert ist, gleitet das Antriebszahnrad des Rührmittels 24 zwischen die Zahnräder 204 und 206. Auch hier ist eine Abdeckung 40 vorgesehen.

Denkbar ist weiter, dass der Behälter 26 aus der Schublade 12" entnommen werden kann und ein nicht gezeigter, baugleicher Austauschbehälter 26 eingesetzt werden kann.

Figur 6 zeigt eine abgewandelte, vierte Ausführungsform des Speiseeisbereiters 320, die bis auf die nachstehend beschriebenen Unterschiede mit den vorstehend dargestellten Ausführungsformen übereinstimmt. Dabei sind gleiche oder vergleichbare Merkmale mit den gleichen Bezugszeichen versehen. Das Rührmittel 124 ist starr angeordnet und an einem Träger 125 befestigt. Der Träger 125 kann beispielsweise in das Gefrierteil 10 einschiebbar ausgeführt sein. Der in der Schublade 12 drehbar aufgenommene schüsselartig ausgebildete Behälter 26 weist an seiner oberen Kante einen Zahnkranz 302 auf, der mit dem Antriebsrad 304 kämmt. Das Antriebsrad 304 wird dabei durch den Antrieb 22 angetrieben. Der Antrieb 22 ist in dieser Ausführungsform auch an der Trägerplatte 125 befestigt bzw. angeordnet. Die Kopplung von Antriebsrad 304 mit dem Zahnkranz 302 kann durch Einschieben bzw. Ausziehen der Schublade 12 erfolgen.

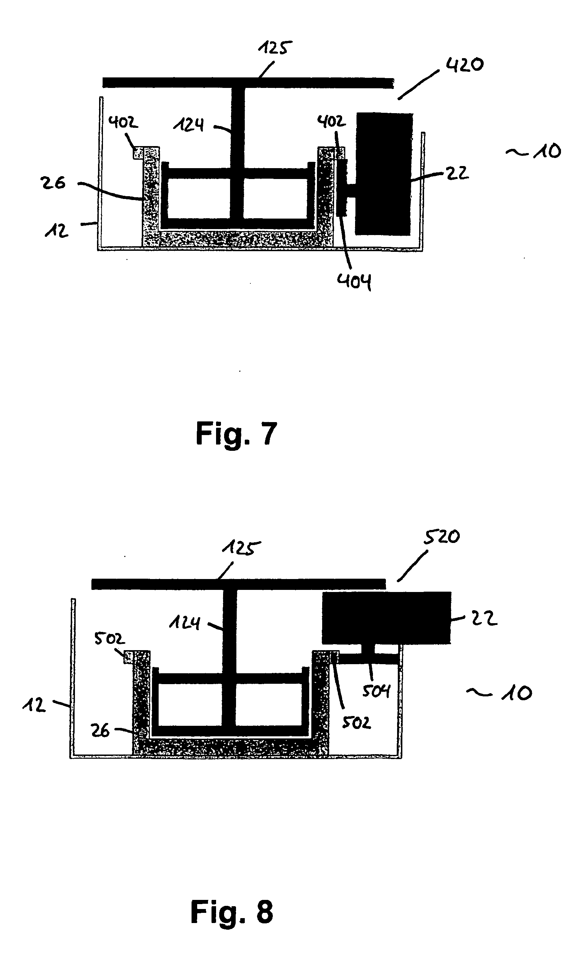

Figur 7 zeigt eine abgewandelte, fünfte Ausführungsform des Speiseeisbereiters 420, die bis auf die nachstehend beschriebenen Unterschiede mit den vorstehend dargestellten Ausführungsformen übereinstimmt. Dabei sind gleiche oder vergleichbare Merkmale mit den gleichen Bezugszeichen versehen. Auch hier ist das Rührmittel 124 starr angeordnet und an einem Träger 125 befestigt. Der Träger 125 kann beispielsweise in das Gefrierteil 10 einschiebbar ausgeführt sein. Der Träger 125 und die Schublade 12 können beispielsweise gemeinsam einschiebbar und gemeinsam ausziehbar ausgeführt sein. Ein Zerlegen des Speiseeisbereiters 420 erfolgt vorzugsweise außerhalb des Kühl- und/oder Gefriergerätes. Der in der Schublade 12 drehbar aufgenommene schüsselartig ausgebildete Behälter 26 weist an seiner Außenseite zur oberen Kante hin einen Zahnkranz 402 auf, der mit dem Antriebsrad 404 kämmt. Das Antriebsrad 404 wird dabei durch den Antrieb 22 angetrieben. Der Antrieb 22 ist in dieser Ausführungsform in der Schublade 12 angeordnet. Die Kopplung von Antriebsrad 304 mit dem Zahnkranz 302 kann durch Einsetzen bzw. Herausnehmen des Behälters 26 erfolgen.

Figur 8 zeigt eine abgewandelte, sechste Ausführungsform des Speiseeisbereiters 520, die bis auf die nachstehend beschriebenen Unterschiede mit den vorstehend dargestellten Ausführungsformen übereinstimmt. Dabei sind gleiche oder vergleichbare Merkmale mit den gleichen Bezugszeichen versehen. Auch hier ist das Rührmittel 124 starr angeordnet und an einem Träger 125 befestigt. Der Träger 125 kann beispielsweise in das Gefrierteil 10 einschiebbar ausgeführt sein. Der Träger 125 und die Schublade 12 können beispielsweise gemeinsam einschiebbar und gemeinsam ausziehbar ausgeführt sein. Ein Zerlegen des Speiseeisbereiters 520 erfolgt vorzugsweise außerhalb des Kühl- und/oder Gefriergerätes. Der in der Schublade 12 drehbar aufgenommene schüsselartig ausgebildete Behälter 26 weist an seiner Außenseite zur oberen Kante hin einen Zahnkranz 502 auf, der mit dem Antriebsrad 504 kämmt. Das Antriebsrad 504 wird dabei durch den Antrieb 22 angetrieben. Der Antrieb 22 ist in dieser Ausführungsform oberhalb der Schublade 12 angeordnet und ragt teilweise in die Schublade 12 hinein. Denkbar ist, dass eine Wandung der Schublade 12 eine Aussparung aufweist, so dass Zahnkranz 502 und Antriebsrad 504 durch das bloße Einschieben der Schublade 12 miteinander in Eingriff gebracht werden können.

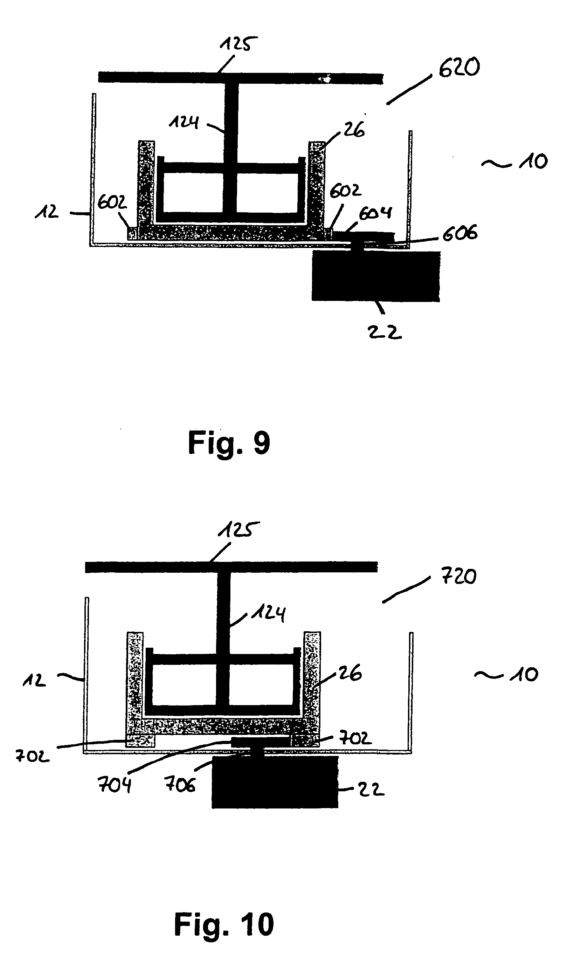

Figur 9 zeigt eine abgewandelte, siebte Ausführungsform des Speiseeisbereiters 620, die bis auf die nachstehend beschriebenen Unterschiede mit den vorstehend dargestellten Ausführungsformen übereinstimmt. Dabei sind gleiche oder vergleichbare Merkmale mit den gleichen Bezugszeichen versehen. Auch hier ist das Rührmittel 124 starr angeordnet und an einem Träger 125 befestigt. Der Träger 125 kann beispielsweise in das Gefrierteil 10 einschiebbar ausgeführt sein. Der Träger 125 und die Schublade 12 können beispielsweise gemeinsam einschiebbar und gemeinsam ausziehbar ausgeführt sein. Ein Zerlegen des Speiseeisbereiters 620 erfolgt vorzugsweise außerhalb des Kühl- und/oder Gefriergerätes. Der in der Schublade 12 drehbar aufgenommene schüsselartig ausgebildete Behälter 26 weist an seiner Außenseite zur unteren Kante hin einen Zahnkranz 602 auf, der mit dem Antriebsrad 604 kämmt. Das Antriebsrad 604 wird dabei durch den Antrieb 22 angetrieben. Der Antrieb 22 ist in dieser Ausführungsform unterhalb der Schublade 12 angeordnet und ragt teilweise, hier mit der das Antriebsrad 604 tragenden Antriebswelle 606 in die Schublade 12 hinein. Denkbar ist, dass eine Wandung der Schublade 12, z. B. der Schubladenboden, eine Aussparung aufweist, so dass Zahnkranz 602 und Antriebsrad 604 durch das bloße Einschieben der Schublade 12 miteinander in Eingriff gebracht werden können.

Figur 10 zeigt eine abgewandelte, achte Ausführungsform des Speiseeisbereiters 720, die bis auf die nachstehend beschriebenen Unterschiede mit den vorstehend dargestellten Ausführungsformen übereinstimmt. Dabei sind gleiche oder vergleichbare Merkmale mit den gleichen Bezugszeichen versehen. Auch hier ist das Rührmittel 124 starr angeordnet und an einem Träger 125 befestigt. Der Träger 125 kann beispielsweise in das Gefrierteil 10 einschiebbar ausgeführt sein. Der Träger 125 und die Schublade 12 können beispielsweise gemeinsam einschiebbar und gemeinsam ausziehbar ausgeführt sein. Ein Zerlegen des Speiseeisbereiters 720 erfolgt vorzugsweise außerhalb des Kühl- und/oder Gefriergerätes. Der in der Schublade 12 drehbar aufgenommene schüsselartig ausgebildete Behälter 26 weist an seiner Unterseite zur äußeren Kante hin einen Zahnkranz 702 auf, der mit dem Antriebsrad 704 kämmt. Das Antriebsrad 704 wird dabei durch den Antrieb 22 angetrieben. Der Antrieb 22 ist in dieser Ausführungsform unterhalb der Schublade 12 angeordnet und ragt teilweise, hier mit der das Antriebsrad 704 tragenden Antriebswelle 706 in die Schublade 12 hinein. Denkbar ist, dass eine Wandung der Schublade 12, z. B. der Schubladenboden, eine Aussparung aufweist, so dass Zahnkranz 702 und Antriebsrad 704 durch das bloße Einschieben der Schublade 12 miteinander in Eingriff gebracht werden können.

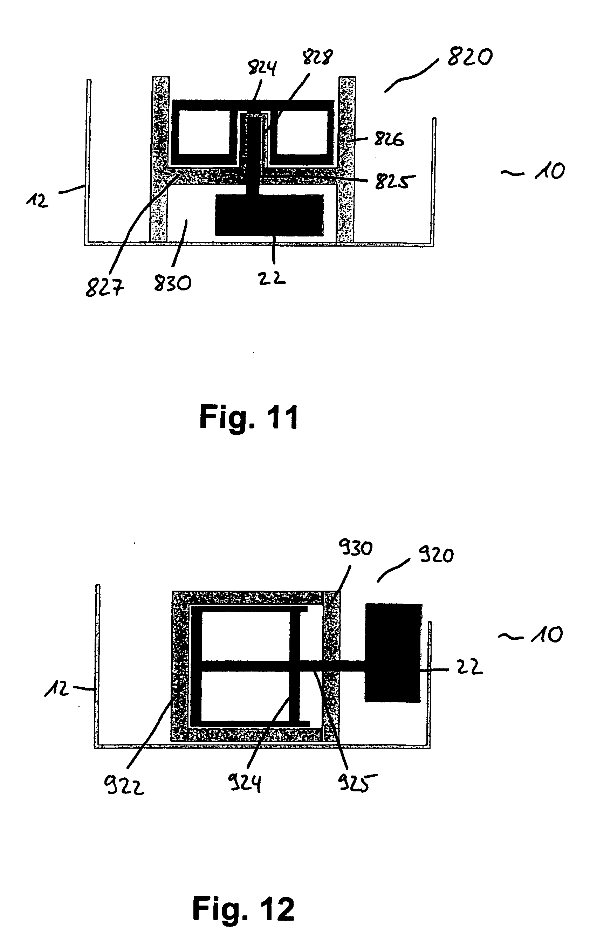

Figur 11 zeigt eine abgewandelte, neunte Ausführungsform des Speiseeisbereiters 820, die bis auf die nachstehend beschriebenen Unterschiede mit den vorstehend dargestellten Ausführungsformen übereinstimmt. Dabei sind gleiche oder vergleichbare Merkmale mit den gleichen Bezugszeichen versehen. Der in der Schublade 12 aufgenommene Speiseeisbereiter 820 weist dabei einen schüsselartig ausgebildeten Behälter 826 auf, der an seiner Unterseite unterhalb des Behälterbodens 827 einen Dom 830 ausbildet. In dem Dom 830 ist zugleich verdeckt der Antrieb 22 angeordnet. Der Antrieb 22 treibt mittels der in dem zentral im Behälter 826 befindlichen Ansatz 828 gelagerten Antriebswelle 825 das Rührmittel 824 an.

Figur 12 zeigt eine abgewandelte, zehnte Ausführungsform des Speiseeisbereiters 920, die bis auf die nachstehend beschriebenen Unterschiede mit den vorstehend dargestellten Ausführungsformen übereinstimmt. Dabei sind gleiche oder vergleichbare Merkmale mit den gleichen Bezugszeichen versehen. In der Schublade 12 ist der Speiseeisbereiter 920 vollständig aufgenommen. Der Speiseeisbereiter 920 weist einen waagrecht liegenden, verschließbaren zylindrischen Behälter 922 auf, der mittels des Deckels 930 verschlossen werden kann. Im Behälter 922 ist das Rührmittel 924 angeordnet, dass mittels der Antriebswelle 925 mit dem Antrieb 22 verbunden ist und hierdurch angetrieben werden kann. Die Antriebswelle 925 tritt dabei durch den Deckel 930 hindurch. Der Behälter 922 bzw. die Antriebswelle 925 des Rührmittels 924 kann waagrecht in eine nicht näher dargestellte Halterung und die Aufnahme des Antriebs 22 bzw. Antriebsmotors 22 eingeschoben werden.

## Patentansprüche

1. Kühl- und/oder Gefriergerät mit wenigstens einem Gefrierteil, wobei im Gefrierteil wenigstens ein modular aufgebauter Speiseeisbereiter vorgesehen ist, wobei der Speiseeisbereiter als modulare, voneinander trennbare Komponenten wenigstens ein Rührmittel und wenigstens einen austauschbaren Behälter zur Aufnahme von Speiseeis aufweist und wobei weiter ein Antriebsmittel vorgesehen ist, mittels dessen das Rührmittel antreibbar ist.

2. Kühl- und/oder Gefriergerät nach Anspruch 1, **dadurch gekennzeichnet, dass** der Behälter gemeinsam mit dem Rührmittel einsetzbar und/oder ausziehbar ist und dass wenigstens eine Kopplung vorgesehen ist, mittels derer Rührmittel und Antriebsmittel mittelbar und/oder unmittelbar verbindbar sind, wobei die Kopplung vorzugsweise formschlüssig und/oder kraftschlüssig ausgebildet ist und/oder ein Zahnradgetriebe und/oder ein Kegelradgetriebe aufweist, und wobei weiter vorzugsweise eine Kopplung durch eine Hubbewegung in Folge der Einschubbewegung herbeiführbar ist.

3. Kühl- und/oder Gefriergerät nach Anspruch 1 oder 2, **dadurch gekennzeichnet, dass** wenigstens ein Steuerungs- und/oder Regelungsmittel vorgesehen ist, mittels dessen die Drehzahl des Rührmittels des Speiseeisbereiters durch Messwerte umfassend die Stromaufnahme des Rührmittels bzw. des Antriebs des Speiseeisbereiters, die Temperatur der Eismasse und/oder die Lufttemperatur im Kühlraum, vorzugsweise durch eine kombinierte Aufnahme aller Daten oder durch vorgegebene Abläufe steuerbar und/oder regelbar ist, wobei weiter vorzugsweise die Überwachung anhand der Stromaufnahme des Rührmittels bzw. des Antriebs derart durchgeführt wird, dass anhand eines Anstiegs der Stromaufnahme über einen vorher festgelegten Grenzwert geräteseitig feststellbar ist, dass die Eismasse die gewünschte Zähigkeit und Konsistenz erreicht hat und damit fertig zubereitet ist, so dass infolgedessen das Rührmittel abgestellt wird, wobei weiter vorzugsweise das Rührmittel mit unterschiedlichen, insbesondere zu Beginn mit höheren Drehzahlen betrieben wird und/oder wobei weiter vorzugsweise der Zustand der Eismasse durch eine Messung der Drehzahl des Rührmittels beobachtet wird, insbesondere durch ein Drehzahlerfassungsmittel bestehend aus wenigstens einem Magneten und wenigstens einem Reedschalter.

4. Kühl- und/oder Gefriergerät mit wenigstens einem Gefrierteil, wobei im Gefrierteil wenigstens ein modular aufgebauter Speiseeisbereiter vorgesehen ist, wobei der Speiseeisbereiter als modulare, voneinander trennbare Komponenten wenigstens ein Rührmittel und wenigstens einen austauschbaren Behälter zur Aufnahme von Speiseeis aufweist und wobei weiter ein Antriebsmittel vorgesehen ist, mittels dessen der Behälter oder mittels dessen das Rührmittel und der Behälter antreibbar ist.

5. Kühl- und/oder Gefriergerät nach Anspruch 4, **dadurch gekennzeichnet, dass** wenigstens ein Steuerungs- und/oder Regelungsmittel vorgesehen ist, mittels dessen die Drehzahl des Behälters des Speiseeisbereiters durch Messwerte umfassend die Stromaufnahme des Antriebsmittels des Behälters bzw. des Antriebs des Speiseeisbereiters, die Temperatur der Eismasse und/oder die Lufttemperatur im Kühlraum, vorzugsweise durch eine kombinierte Aufnahme aller Daten oder durch vorgegebene Abläufe steuerbar und/oder regelbar ist, wobei weiter vorzugsweise die Überwachung anhand der Stromaufnahme des Antriebsmittels des Behälters derart durchgeführt wird, dass anhand eines Anstiegs der Stromaufnahme über einen vorher festgelegten Grenzwert geräteseitig feststellbar ist, dass die Eismasse die gewünschte Zähigkeit und Konsistenz erreicht hat und damit fertig zubereitet ist, so dass infolgedessen das Antriebsmittel abgestellt wird, wobei weiter vorzugsweise das Antriebsmittel zum Antrieb des Behälters mit unterschiedlichen, insbesondere zu Beginn mit höheren Drehzahlen betrieben wird und/oder wobei weiter vorzugsweise der Zustand der Eismasse durch eine Messung der Drehzahl des Behälters beobachtet wird, insbesondere durch ein Drehzahlerfassungsmittel bestehend aus wenigstens einem Magneten und wenigstens einem Reedschalter.

6. Kühl- und/oder Gefriergerät nach Anspruch 4 oder 5, **dadurch gekennzeichnet, dass** das Rührmittel feststehend im Gefrierteil angeordnet ist und/oder werden kann und/oder dass wenigstens eine Kopplung vorgesehen ist, mittels derer Behälter und Antriebsmittel mittelbar und/oder unmittelbar verbindbar sind, wobei die Kopplung vorzugsweise formschlüssig und/oder kraftschlüssig ausgebildet ist und/oder ein Zahnradgetriebe und/oder ein Kegelradgetriebe aufweist und/oder wobei die Kopplung vorzugsweise zumindest teilweise verdeckt ausgebildet ist, und/oder dass der Behälter gemeinsam mit dem Rührmittel einsetzbar und/oder ausziehbar ist.

7. Kühl- und/oder Gefriergerät nach einem der vorhergehenden Ansprüche, **dadurch gekennzeichnet, dass** der Behälter zumindest aus einem Material besteht, das eine gute Wärmeleitung und/oder eine leicht zu reinigende hygienische Oberfläche aufweist, wobei vorzugsweise Verbundmaterialien eingesetzt werden, die beispielsweise Edelstahl und/oder Aluminium umfassen können, und/oder dass der Behälter doppelwandig ausgeführt ist und mit einer Sole oder einem Latentwärmespeicher mit einem Gefrierpunkt von ca. -20°C bis -5°C gefüllt ist und/oder dass der Behälter zumindest teilweise konisch ausgebildet ist.

8. Kühl- und/oder Gefriergerät nach einem der vorhergehenden Ansprüche, **dadurch gekennzeichnet, dass** der Behälter in Form einer Schublade für das Gefrierteil des Kühl- und/oder Gefriergerätes ausgebildet ist und/oder in einer Schublade des Gefrierteils des Kühl- und/oder Gefriergerätes aufnehmbar und/oder aufgenommen ist und/oder dass das Antriebsmittel in der Decke, Seitenwand und/oder Rückwand des Kühl- und/oder Gefriergerätes angeordnet ist.

9. Kühl- und/oder Gefriergerät nach einem der vorhergehenden Ansprüche, **dadurch gekennzeichnet, dass** wenigstens ein Luftumwälzmittel, insbesondere wenigstens ein Ventilator vorgesehen ist, mittels dessen die Luftströmung in und/oder um den Behälter erhöhbar und/oder die Abkühlung des Behälters und seines Inhalts beschleunigbar ist und/oder dass ein Eiswürfelzugabemittel vorgesehen ist, mittels dessen Eiswürfel und/oder Eisstückchen dem Behälter zuführbar sind und/oder der Speiseeisbereiter mittelbar und/oder unmittelbar an den Verdampfer des Kühl- und/oder Gefriergerätes und/oder einen Teil des Innenbehälters des Kühl- und/oder Gefriergerätes, der mit dem Verdampfer in Kontakt steht, angekoppelt ist.

10. Kühl- und/oder Gefriergerät nach einem der vorhergehenden Ansprüche, **dadurch gekennzeichnet, dass** wenigstens ein Kältespeichermittel vorgesehen ist, das mit dem Behälter koppelbar ist, wobei das Kältespeichermittel vorzugsweise ein Kälteakku ist.

11. Kühl- und/oder Gefriergerät nach einem der vorhergehenden Ansprüche, **dadurch gekennzeichnet, dass** das Kühl- und/oder Gefriergerät in einem gesonderten Kühlmodus zur Speiseeisherstellung mittels des Speiseeisbereiters betreibbar ist.

12. Kühl- und/oder Gefriergerät nach einem der vorhergehenden Ansprüche, **dadurch gekennzeichnet, dass** wenigstens ein Ausgabemittel und/oder wenigstens ein Eingabemittel vorgesehen ist, wobei mittels des Ausgabemittels der Fortschritt der Speiseeiszubereitung anzeigbar ist und/oder wobei mittels des Eingabemittels die Speiseeiszubereitung steuerbar ist.

13. Kühl- und/oder Gefriergerät nach einem der vorhergehenden Ansprüche, **dadurch gekennzeichnet, dass** der Behälter als verschließbarer zylindrischer Behälter ausgebildet ist, wobei der Behälter vorzugsweise waagrecht im Gefrierteil liegend im eingesetzten Zustand angeordnet ist und wobei weiter vorzugsweise der Behälter und/oder die Antriebswelle des Rührmittels waagrecht in eine Halterung und eine Aufnahme des Antriebsmittels einschiebbar ist.

14. Verfahren zum Betrieb eines Speiseeisbereiters in einem Kühl- und/oder Gefriergerät, insbesondere einem Kühl- und/oder Gefriergerät nach einem der vorhergehenden Ansprüche, wobei die Drehzahl des Rührmittels des Speiseeisbereiters durch Messwerte umfassend die Stromaufnahme des Rührmittels bzw. des Antriebs des Speiseeisbereiters, die Temperatur der Eismasse und/oder die Lufttemperatur im Kühlraum, vorzugsweise durch eine kombinierte Aufnahme aller Daten oder durch vorgegebene Abläufe gesteuert wird, wobei weiter vorzugsweise die Überwachung anhand der Stromaufnahme des Rührmittels bzw. des Antriebs derart durchgeführt wird, dass anhand eines Anstiegs der Stromaufnahme über einen vorher festgelegten Grenzwert geräteseitig feststellbar ist, dass die Eismasse die gewünschte Zähigkeit und Konsistenz erreicht hat und damit fertig zubereitet ist, so dass infolgedessen das Rührmittel abgestellt wird, wobei weiter vorzugsweise das Rührmittel mit unterschiedlichen, insbesondere zu Beginn mit höheren Drehzahlen betrieben wird und/oder wobei weiter vorzugsweise der Zustand der Eismasse durch eine Messung der Drehzahl des Rührmittels beobachtet wird, insbesondere durch ein Drehzahlerfassungsmittel bestehend aus wenigstens einem Magneten und wenigstens einem Reedschalter.

15. Verfahren zum Betrieb eines Speiseeisbereiters in einem Kühl- und/oder Gefriergerät, insbesondere einem Kühl- und/oder Gefriergerät nach einem der Ansprüche 1 bis 13, wobei die Drehzahl des Behälters des Speiseeisbereiters durch Messwerte umfassend die Stromaufnahme des Antriebsmittels des Behälters bzw. des Antriebs des Speiseeisbereiters, die Temperatur der Eismasse und/oder die Lufttemperatur im Kühlraum, vorzugsweise durch eine kombinierte Aufnahme aller Daten oder durch vorgegebene Abläufe gesteuert wird, wobei weiter vorzugsweise die Überwachung anhand der Stromaufnahme des Antriebsmittels des Behälters derart durchgeführt wird, dass anhand eines Anstiegs der Stromaufnahme über einen vorher festgelegten Grenzwert geräteseitig feststellbar ist, dass die Eismasse die gewünschte Zähigkeit und Konsistenz erreicht hat und damit fertig zubereitet ist, so dass infolgedessen das Antriebsmittel des Behälters abgestellt wird, wobei weiter vorzugsweise das Antriebsmittel des Behälters mit unterschiedlichen, insbesondere zu Beginn mit höheren Drehzahlen betrieben wird und/oder wobei weiter vorzugsweise der Zustand der Eismasse durch eine Messung der Drehzahl des Behälters beobachtet wird, insbesondere durch ein Drehzahlerfassungsmittel bestehend aus wenigstens einem Magneten und wenigstens einem Reedschalter.
